# EUROPÄISCHE PATENTANMELDUNG

(11) **EP 2 184 439 A2**
(43) Veröffentlichungstag der Anmeldung: **12.05.2010**
(21) Anmeldenummer: 09174865.7
(22) Anmeldetag: 03.11.2009
(51) Int. Cl.: F01D 5/02

(54) **Verfahren zur Herstellung einer Triebwerkswelle**

(30) Priorität: 05.11.2008 DE 102008056017
(71) Anmelder: Rolls-Royce Deutschland Ltd & Co KG, 15827 Blankenfelde-Mahlow (DE)
(72) Erfinder: Schreiber, Karl, 15838, Am Mellensee (DE); Grothaus, Raimund, 01326, Dresden (DE)

(57) **Zusammenfassung**

Zur Herstellung einer aus einem Faserverbundmaterial bestehenden rohrförmigen Niederdruckturbinenwelle mit an den Enden befestigtem metallischen Abtriebs-/Antriebszapfen (2) wird das Fasermaterial auf einen als geschlossenes Rohr aus hochfestem Material bestehenden Wickelkern (4) und einen an den Abtriebs-/Antriebszapfen angeformten konisch verjüngten Adapter (3) gewickelt. Durch Aufweiten des Wickelkerns mit einem flüssigen Druckmedium wird das in ein Kunstharz eingebettete Fasermaterial in Abhängigkeit von der Ausbildung des Wickelkörpers und dem Flüssigkeitsdruck verdichtet. Nach dem Aushärten des Kunstharzes bei erhöhter Temperatur wird der Wickelkern druckentlastet und mit wieder reduziertem Durchmesser entfernt.

## Beschreibung

Die Erfindung betrifft ein Verfahren zur Herstellung einer Triebwerkswelle, insbesondere der Niederdruckturbinenwelle oder der Radialwelle für ein Gasturbinentriebwerk.

Die konzentrisch in der hohl ausgebildeten Zwischendruckturbinenwelle oder bei einem Zweiwellen-Triebwerk in der Hochdruckturbinenwelle angeordnete Niederdruckturbinenwelle, die zur Verbindung mit dem Fan und der Niederdruckturbine an ihren Enden Kopplungselemente zur Lasteinleitung und Lastableitung aufweist, hat gegenüber den beiden anderen Wellen den geringsten Durchmesser, die größte Länge und die geringste Drehzahl und muss zudem die höchste Belastung aufnehmen. Sie stellt daher innerhalb des Triebwerks ein hoch belastetes, kritisches Bauteil dar, das keinesfalls versagen darf, aber andererseits einen möglichst geringen Außendurchmesser haben soll, um Rotorscheiben mit geringem Innendurchmesser einsetzen und leichte und leistungsfähige Triebwerke bereitstellen zu können. Die üblicherweise aus Stahl oder einem Nickelbasiswerkstoff bestehende, geschmiedete und hohl gebohrte Niederdruckturbinenwelle ist kostenaufwendig in der Herstellung und weist ein hohes Gewicht auf. Um bei möglichst kleinem Wellendurchmesser dennoch größere Drehmomente übertragen sowie größere Wellenlängen und höhere Drehzahlen erreichen zu können und eine hohe Steifigkeit zu erzielen, besteht nur die Möglichkeit einer Wandstärkenvergrößerung nach innen. Damit ist jedoch eine sich an die Eigenfrequenz des Triebwerks annähernde Senkung der Eigenfrequenz der Niederdruckwelle verbunden, so dass sowohl das Gewicht als auch die Gefahr einer Beschädigung der Niederdruckturbinenwelle erhöht wird.

Ähnliche Anforderungen werden auch an die ein inneres und ein äußeres Getriebe verbindende Radialwelle gestellt, die jedoch an beiden Wellenenden, aber immer in der gleichen Richtung angetrieben wird, so dass unterschiedliche Drehmomente auf die Radialwelle wirken. Wie die Niederdruckwelle muss auch die Radialwelle möglichst schlank ausgebildet sein.

Der Erfindung liegt die Aufgabe zugrunde, ein Verfahren zur Herstellung einer Triebwerkswelle mit möglichst großer Länge sowie geringem Durchmesser und Gewicht anzugeben, die dennoch hohe Drehmomente übertragen kann.

Erfindungsgemäß wird die Aufgabe mit einem Verfahren gemäß den Merkmalen des Patenanspruchs 1 gelöst. Vorteilhafte Weiterbildungen der Erfindung sind Gegenstand der Unteransprüche.

Der Kern der Erfindung besteht in der Fertigung der Niederdruckturbinenwelle oder der Radialwelle für Gasturbinentriebwerke aus einem als Rohr geformten Faserverbundmaterial und einem mit diesem verbundenen metallischen Abtriebszapfen zur Lastableitung bzw. Antriebszapfen zur Lasteinleitung, indem auf einen als geschlossenes, druckfestes Rohr ausgebildeten Wickelkern sowie einen an diesen stirnseitig anschließenden konisch verjüngten Adapter des Abtriebszapfens bzw. Antriebszapfens ein Fasermaterial und ein hochtemperaturbeständiges Kunstharz aufgebracht und das Fasermaterial durch Aufweiten des Wickelkerns mittels eines in diesen eingebrachten flüssigen Druckmediums zusammengepresst und das Kunstharz in diesem Zustand bei erhöhter Temperatur ausgehärtet wird. Nach der Aushärtung des Harzes und der Druckentlastung des Wickelkerns sowie der damit verbundenen Durchmesserverringerung kann der Wickelkern entfernt werden. Mit dem vorgeschlagenen Verfahren können Triebwerkswellen mit geringem Durchmesser und großer Länge zur Verfügung gestellt werden, die aufgrund der hohen und am Umfang gleichmäßigen, über den Innendruck im Wickelkern steuerbaren Faserverfestigung bei geringem Gewicht sehr hohe Drehmomente übertragen können.

In Ausgestaltung der Erfindung wird das Fasermaterial in trockenem Zustand aufgewickelt und das Kunstharz in das Fasermaterial nach dessen Ummantelung mit einem rohrförmigen Außenwerkzeug unter Vakuum infiltriert.

Gemäß einem noch anderen Merkmal der Erfindung wird das Fasermaterial in einem Nasswickelprozess zusammen mit dem Kunstharz aufgewickelt. In diesem Fall kann auf das rohrförmige Außenwerkzeug auch verzichtet werden, wobei das Fasermaterial dennoch stark verdichtet wird.

In weiterer Ausgestaltung der Erfindung werden das Material und die Wandstärke des Wickelkerns sowie der mit dem flüssigen Druckmedium im Innern des Wickelkerns aufgebrachte Druck so aufeinander abgestimmt, dass der Außendurchmesser des Wickelkerns auf ein bestimmtes Maß geweitet und das Fasermaterial in einem bestimmten Umfang zusammengepresst wird.

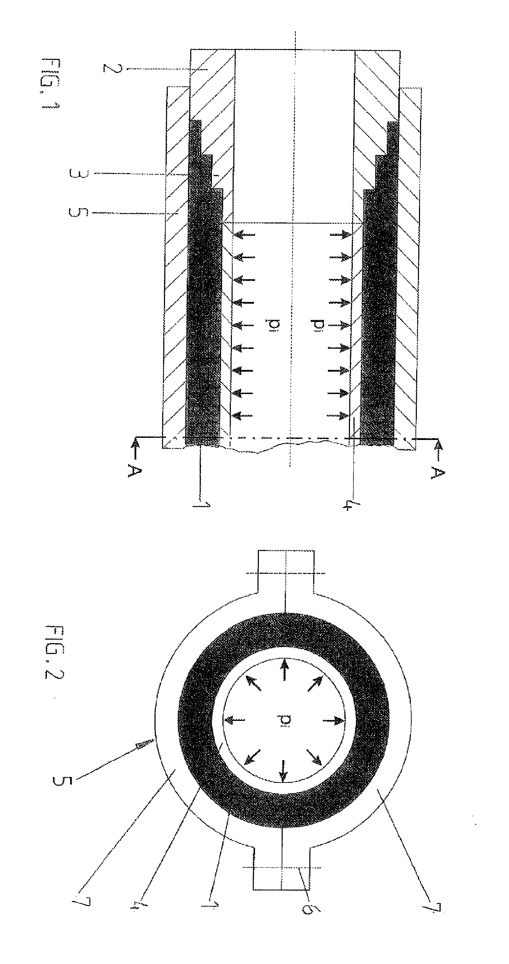

Ein Ausführungsbeispiel der Erfindung wird anhand der Zeichnung, in der
- Fig. 1: eine Schnittansicht des lastableitenden Endes einer aus Faserverbundmaterial bestehenden Niederdruckturbinenwelle während des Fertigungsprozesses; und
- Fig. 2: eine Schnittansicht längs der Linie AA in Fig. 1zeigt, näher erläutert.

Die Niederdruckturbinenwelle umfasst einen aus Faserverbundmaterial, das heißt in eine hochtemperaturbeständige Kunststoffmatrix eingebetteten Kohlenstofffasern bestehenden Hohlkörper 1, dessen Außendurchmesser in der vorliegenden Ausführungsvariante 100 mm nicht überschreiten soll. In das zum Fan weisende Ende der Niederdruckturbinenwelle ist ein aus Stahl bestehender Abtriebszapfen 2 zur Lastableitung eingebunden, und zwar derart, dass ein an den Abtriebszapfen 2 angeformter Adapter 3 mit sich - hier stufenförmig - verringerndem Durchmesser mit dem Fasermaterial (hier Kohlenstofffasern) bewickelt und an diesem verankert ist. Das an die Niederdruckturbine eines Triebwerks angeschlossene andere Ende der Niederdruckturbinenwelle kann entweder auf gleiche Art mit einem Antriebszapfen verbunden sein oder einen aus dem Faserverbundmaterial ausgeformten Flansch (nicht dargestellt) zur Lasteinleitung aufweisen.

Die Herstellung der oben beschriebenen Niederdruckturbinenwelle erfolgt in der Weise, dass das stirnseitige Ende des Adapters 3 (bzw. der beiden Adapter des Abtriebs- und des Antriebszapfens) mit einem an eine Druckluftquelle anschließbaren geschlossenen, rohrförmigen Wickelkern 4 in Wirkverbindung gebracht wird und anschließend die Fasern -hier Kohlenstofffasern - in einer bestimmten, in einzelnen Faserlagen unterschiedlichen Ausrichtung, die einerseits die Übertragung hoher Torsionskräfte gewährleistet und andererseits für eine hohe Steifigkeit und Eigenfrequenz der Niederdruckturbinenwelle sorgt, auf den Wickelkern 4 und auf den Adapter 3 des Abtriebszapfens 2 (und gegebenenfalls des - nicht dargestellten - Antriebszapfens) gewickelt werden. Danach wird um das aufgewickelte Fasermaterial ein rohrförmiges Außenwerkzeug 5, das hier aus zwei durch Bolzen 6 miteinander verbundenen Halbschalen 7 besteht, gelegt. Anschließend wird über in dem Außenwerkzeug 5 vorhandene Öffnungen (nicht dargestellt) mit erhöhtem Druck (sechs bar) ein bei hohen Temperaturen beständiges Kunstharz in das Fasermaterial, und zwar bei einem in diesem erzeugten Unterdruck, infiltriert. In dem nachfolgenden Schritt werden die Fasern durch einen in dem aus einem hochfesten Vergütungsstahl bestehenden Wickelkern 4 durch Einbringen eines flüssigen Druckmediums erzeugten Innendruck pᵢ und eine damit verbundene Der Innendruck sowie das Material und die Wandstärke des Wickelkern sind so aufeinander abgestimmt, dass das Fasermaterial zwischen der Außenfläche des Wickelkerns 4 und der Innenfläche des Außenwerkzeugs 5 in dem erforderlichen Umfang verdichtet wird. Nach dem Aushärten des in die Fasermaterialwicklung vakuumbegleitet infiltrierten Harzes bei erhöhter Temperatur, bei der sich das flüssige Druckmedium jedoch nicht weiter ausdehnt und der Wickelkern nicht noch stärker geweitet wird, und dem nachfolgenden Absenken des Innendrucks pᵢ werden das Außenwerkzeug 5 und der Wickelkern 4 entfernt.

Unter Verzicht auf das Außenwerkzeug ist es auch denkbar, die Fasern in einem Nasswickelprozess auf den noch nicht aufgeweiteten Wickelkern 4 aufzuwickeln. Danach wird der Wickelkern 4 - wie oben beschrieben- mit einem flüssigen Druckmedium geweitet und dabei das Fasermaterial verdichtet. Nach dem Aushärten des in dieser Ausführungsvariante bereits mit dem Wickelprozess eingebrachten hochtemperaturbeständigen Harzes wird der Wickelkern 4 entlastet und anschließend entfernt.

### Bezugszeichenliste

- 1: rohrförmiger Hohlkörper, Faserverbundmaterial
- 2: Abtriebszapfen
- 3: Adapter
- 4: rohrförmiger, geschlossener Wickelkern
- 5: rohrförmiges Außenwerkzeug
- 6: Bolzen
- 7: Halbschalen

## Patentansprüche

1. Verfahren zur Herstellung einer Triebwerkswelle für ein Gasturbinentriebwerk, insbesondere der Niederdruckturbinenwelle oder der Radialwelle, durch **gekennzeichnet**, dass auf einen als geschlossenes Rohr ausgebildeten, aus einem hochfesten Material bestehenden Wickelkern (4) sowie einen an den Wickelkern (4) stirnseitig anschließenden konisch verjüngten Adapter (3) eines metallischen Abtriebszapfens (2) ein in bestimmten Winkellagen ausgerichtetes Fasermaterial und ein dieses einbettendes hochtemperaturbeständiges Kunstharz aufgebracht werden und der Wickelkern (4) anschließend mit einem flüssigen Druckmedium geweitet und dabei das Fasermaterial verdichtet wird, wobei das Kunstharz anschließend bei erhöhter Temperatur ausgehärtet und der Wickelkern (4) danach druckentlastet und mit einem reduzierten Außendurchmesser wieder entfernt wird.

2. Verfahren nach Anspruch 1, **dadurch gekennzeichnet, dass** das Fasermaterial in trockenem Zustand aufgewickelt und das Kunstharz in das Fasermaterial nach dessen Ummantelung mit einem rohrförmigen Außenwerkzeug (5) unter Vakuum infiltriert wird.

3. Verfahren nach Anspruch 2, **dadurch gekennzeichnet, dass** das Außenwerkzeug (5) aus zwei miteinander verspannbaren Halbschalen (7) besteht.

4. Verfahren nach Anspruch 1, **dadurch gekennzeichnet, dass** das Fasermaterial in einem Nasswickelprozess gemeinsam mit dem Kunstharz aufgewickelt wird.

5. Verfahren nach Anspruch 1, **dadurch gekennzeichnet, dass** der Wickelkern (4) aus einem hochfesten Vergütungsstahl besteht.

6. Verfahren nach Anspruch 1, **dadurch gekennzeichnet, dass** das Material und die Wandstärke des Wickelkerns sowie der mit dem flüssigen Druckmedium im Innern des Wickelkerns aufgebrachte Druck so aufeinander abgestimmt sind, dass der Außendurchmesser des Wickelkerns auf ein bestimmtes Maß geweitet und das Fasermaterial in einem bestimmten Umfang verfestigt wird.

7. Verfahren nach Anspruch 1, **dadurch gekennzeichnet, dass** das Fasermaterial auch auf einen metallischen Antriebszapfen gewickelt wird.
